# EUROPEAN PATENT APPLICATION

(11) **EP 4 711 718 A1**
(43) Date of publication of application: **18.03.2026**
(21) Application number: 24835154.6
(22) Date of filing: 22.05.2024
(51) Int. Cl.: G01C 21/34, B60W 30/06

(54) **CONTROL METHOD AND APPARATUS, AND INTELLIGENT DRIVING DEVICE**

(30) Priority: 06.07.2023 CN 202310829214
(71) Applicant: Shenzhen Yinwang Intelligent Technologies Co., Ltd., Shenzhen, Guangdong 518110 (CN)
(72) Inventor: LIANG, Guanqun, Shenzhen, Guangdong 518129 (CN); MA, Xiaokang, Shenzhen, Guangdong 518129 (CN); TONG, Liuzhu, Shenzhen, Guangdong 518129 (CN)
(74) Representative: Gill Jennings & Every LLP
(86) International application number: PCT/CN2024/094637
(87) International publication number: WO 2025/007669

(57) **Abstract**

A control method and apparatus, and an intelligent driving device are provided. The method includes: controlling an intelligent driving device to travel along a first planned route, where the first planned route is obtained through planning in a first planning mode; and when a first obstacle in the first planned route causes a passable width corresponding to a first area to be less than or equal to a first preset threshold, and/or when the first obstacle causes a curvature of a feasible route in the first area to be greater than or equal to a second preset threshold, controlling the intelligent driving device to switch from traveling along the first planned route to traveling along a second planned route, where the second planned route is obtained through planning in a second planning mode, the first planning mode is different from the second planning mode, and the first planned route passes through the first area. The method may be applied to an intelligent vehicle like an electric vehicle or a new energy vehicle, to reduce a probability that the intelligent driving device cannot perform route planning due to an obstacle or a complex road condition in an AVP parking process, and help improve a parking success rate.

## Description

This application claims priority to Chinese Patent Application No. 202310829214.9, filed with the China National Intellectual Property Administration on July 6, 2023 and entitled "CONTROL METHOD AND APPARATUS, AND INTELLIGENT DRIVING DEVICE", which is incorporated herein by reference in its entirety.

### TECHNICAL FIELD

This application relates to the field of intelligent driving, and more specifically, to a control method and apparatus, and an intelligent driving device.

### BACKGROUND

As the automobile industry rapidly develops, many assisted driving technologies and autonomous driving technologies have emerged, which can reduce driving pressure, improve safety, and enhance traffic efficiency. Automatic parking (auto parking, AP) is a widely used assisted driving technology. The AP refers to automatic parking of a vehicle. To be specific, an autonomous driving system may semi-automatically or fully automatically help a user park the vehicle into a parking space. The automatic parking may include automatic parking assist (auto parking assist, APA), remote parking assist (remote parking assist, RPA), automatic valet parking (auto valet parking, AVP), and the like.

In a parking lot, road conditions often include large-curvature turns, narrow-passage turns, or complex obstacle locations. Because a route planning capability of the current AVP cannot cope with the foregoing complex situation, when the AVP is used for parking, the vehicle may be blocked and stop.

In view of this, a control solution that can improve an escape capability of a vehicle in an automatic parking process needs to be developed urgently.

### SUMMARY

This application provides a control method and apparatus, and an intelligent driving device, to reduce a probability that an intelligent driving device cannot perform route planning due to an obstacle or a complex road condition in an AVP parking process, and help improve a parking success rate.

According to a first aspect, a control method is provided. The method may be performed by an intelligent driving device, or may be performed by a computing platform of an intelligent driving device, or may be performed by a chip or a circuit used in an intelligent driving device. This is not limited in this application.

The method includes: controlling the intelligent driving device to travel along a first planned route, where the first planned route is obtained through planning in a first planning mode; and when a first obstacle in the first planned route causes a passable width corresponding to a first area to be less than or equal to a first preset threshold, and/or when the first obstacle causes a curvature of a feasible route in the first area to be greater than or equal to a second preset threshold, controlling the intelligent driving device to switch from traveling along the first planned route to traveling along a second planned route, where the second planned route is obtained through planning in a second planning mode, the first planning mode is different from the second planning mode, and the first planned route passes through the first area.

In the foregoing technical solution, two route planning modes with different route planning capabilities are provided. In a traveling process of the intelligent driving device, mode switching is performed based on an actual road condition, to help improve a passing capability of the intelligent driving device in different road conditions. Particularly, in an AVP parking process, a probability that a vehicle cannot perform route planning in a scenario with a narrow passage or a complex obstacle position relationship can be reduced, helping improve an AVP parking success rate.

For example, the first preset threshold may be determined based on a width of the intelligent driving device, and the second preset threshold may be 0.01, 0.1, or another value.

In some possible implementations, when the first obstacle in the first planned route causes the passable width corresponding to the first area to be less than or equal to the first preset threshold, and/or when the first obstacle causes the curvature of the feasible route in the first area to be greater than or equal to the second preset threshold, the intelligent driving device is controlled to stop traveling and switch from the first planning mode to the second planning mode.

In some possible implementations, the first area may include one or more feasible routes, and that the curvature of the feasible route in the first area is greater than or equal to the second preset threshold includes: A curvature of a feasible route whose curvature is the smallest in the first area is greater than or equal to the second preset threshold.

In some possible implementations, the first area is determined based on a first route and a position of a first sub-obstacle.

It should be noted that the first planning mode and the second planning mode have different planning capabilities in different scenarios. In the first planning mode, only simple route planning can be performed, and a planning capability in an area with a narrow road, a large curvature, and a complex obstacle position is low. In the second planning mode, route planning can be performed in a case of a narrow road, a large curvature, and a complex obstacle position.

In some possible implementations, the second planned route includes a plurality of route segments with different gear combinations, for example, includes a plurality of route segments with combinations of a plurality of drive gears and a reverse gear.

With reference to the first aspect, in some implementations of the first aspect, the first area includes a head end and a tail end, the head end of the first area is an end close to a current position of the intelligent driving device, and the tail end of the first area is an end close to a destination of the intelligent driving device. The method further includes: determining a first target pose of the intelligent driving device based on the first planned route; determining a second target pose based on the first target pose and a position of the first obstacle, where the second target pose indicates a pose at which the intelligent driving device travels out of the first area; and planning the second planned route based on a current pose of the intelligent driving device, the second target pose, and the first obstacle.

For example, the second planned route may be planned based on the current pose of the intelligent driving device, the second target pose, and the first obstacle according to a hybrid A* (A-star) algorithm or a geometric method.

For example, determining the second target pose based on the first target pose and the position of the first obstacle includes: adjusting a horizontal position and/or a vertical position of the first target pose based on the position of the first obstacle, to obtain the second target pose.

In some possible implementations, the first target pose and the second target pose are a same pose.

In the foregoing technical solution, the second target pose is determined based on the first planned route planned in the first planning mode. This helps reduce route planning difficulty. Determining the second target pose based on the position of the first obstacle helps implement adaptation to a scale of the obstacle, and cross a current trapped area to obtain a feasible escape position.

With reference to the first aspect, in some implementations of the first aspect, the method further includes: determining a drivable area along the first planned route based on the first planned route; and planning the second planned route based on the current pose of the intelligent driving device and the second target pose includes: planning the second planned route in the drivable area based on the current pose, the second target pose, and the first obstacle.

In the foregoing technical solution, the drivable area is generated based on the first planned route. In a traveling process, the intelligent driving device can be prevented from moving away from a road. In a parking process, the vehicle can be prevented from traveling into another parking space. In addition, the drivable area is generated based on the first planned route, so that a case in which the intelligent driving device cannot resume cruising when switching back to the first planning mode can be avoided, and a case in which the intelligent driving device is trapped again after escaping can also be avoided.

With reference to the first aspect, in some implementations of the first aspect, the method further includes: when the intelligent driving device travels in a preset range of the second target pose, or when the intelligent driving device travels through the second target pose, determining that the intelligent driving device avoids the first obstacle based on the second planned route.

For example, the preset range of the second target pose may be a preset range of a center point of the second target pose. The preset range may be a range of 2 meters away from the center point of the second target pose, or may be another range.

In the foregoing technical solution, an escape completion determining method is provided, to help the intelligent driving device switch back to the first planning mode in time after the intelligent driving device escapes, and reduce time required for mode switching. In this way, the intelligent driving device does not need to be controlled to stop traveling when switching back from the second planning mode to the first planning mode. This helps improve traffic efficiency and user experience.

With reference to the first aspect, in some implementations of the first aspect, the method further includes: when the intelligent driving device avoids the first obstacle based on the second planned route, controlling the intelligent driving device to switch from traveling along the second planned route to traveling along a third planned route, where the third planned route is obtained through planning in the first planning mode.

In the foregoing technical solution, when completing escape traveling, the intelligent driving device switches back to the first planning mode to perform route planning. This helps improve a planning capability in a normal road condition.

With reference to the first aspect, in some implementations of the first aspect, the method further includes: when the intelligent driving device avoids the first obstacle based on the second planned route, controlling a prompt apparatus to give a prompt to stop the second planning mode and/or start the first planning mode.

In the foregoing technical solution, during planning mode switching, the prompt apparatus gives a prompt, so that when a driver of the intelligent driving device is in the loop, the driver can learn of a current status of the vehicle, to take over the intelligent driving device in time.

With reference to the first aspect, in some implementations of the first aspect, the method further includes: when the first obstacle in the first planned route causes the passable width corresponding to the first area to be less than or equal to the first preset threshold, controlling the prompt apparatus to give a prompt to stop the first planning mode and/or start the second planning mode.

With reference to the first aspect, in some implementations of the first aspect, the second planning mode includes a hybrid A* algorithm.

In the foregoing technical solution, during planning mode switching, the prompt apparatus gives a prompt, so that when a driver of the intelligent driving device is in the loop, the driver can learn of a current status of the vehicle, to take over the intelligent driving device in time.

According to a second aspect, a control apparatus is provided. The apparatus includes a first processing unit and a second processing unit. The first processing unit is configured to control an intelligent driving device to travel along a first planned route, where the first planned route is obtained through planning in a first planning mode. The second processing unit is configured to: when a first obstacle in the first planned route causes a passable width corresponding to a first area to be less than or equal to a first preset threshold, and/or when the first obstacle causes a curvature of a feasible route in the first area to be greater than or equal to a second preset threshold, control the intelligent driving device to switch from traveling along the first planned route to traveling along a second planned route, where the second planned route is obtained through planning in a second planning mode, the first planning mode is different from the second planning mode, and the first planned route passes through the first area.

With reference to the second aspect, in some implementations of the second aspect, the first area includes a head end and a tail end, the head end of the first area is an end close to a current position of the intelligent driving device, and the tail end of the first area is an end close to a destination of the intelligent driving device. The second processing unit is configured to: determine a first target pose of the intelligent driving device based on the first planned route; determine a second target pose based on the first target pose and a position of the first obstacle, where the second target pose indicates a pose at which the intelligent driving device travels out of the first area; and plan the second planned route based on a current pose of the intelligent driving device, the second target pose, and the first obstacle.

With reference to the second aspect, in some implementations of the second aspect, the second processing unit is further configured to: determine a drivable area along the first planned route based on the first planned route; and plan the second planned route in the drivable area based on the current pose, the second target pose, and the first obstacle.

With reference to the second aspect, in some implementations of the second aspect, the second processing unit is further configured to: when the intelligent driving device travels in a preset range of the second target pose, or when the intelligent driving device travels through the second target pose, determine that the intelligent driving device avoids the first obstacle based on the second planned route.

With reference to the second aspect, in some implementations of the second aspect, the second processing unit is further configured to: when the intelligent driving device avoids the first obstacle based on the second planned route, control the intelligent driving device to switch from traveling along the second planned route to traveling along a third planned route, where the third planned route is obtained through planning in the first planning mode.

With reference to the second aspect, in some implementations of the second aspect, the second processing unit is further configured to: when the intelligent driving device avoids the first obstacle based on the second planned route, control a prompt apparatus to give a prompt to stop the second planning mode and/or start the first planning mode.

With reference to the second aspect, in some implementations of the second aspect, the second processing unit is further configured to: when the first obstacle in the first planned route causes the passable width corresponding to the first area to be less than or equal to the first preset threshold, control the prompt apparatus to give a prompt to stop the first planning mode and/or start the second planning mode.

With reference to the second aspect, in some implementations of the second aspect, the second planning mode includes a hybrid A* algorithm.

According to a third aspect, a control apparatus is provided. The apparatus includes: a memory, configured to store a computer program; and a processor, configured to execute the computer program stored in the memory, so that the apparatus performs the method according to any possible implementation of the first aspect.

According to a fourth aspect, an intelligent driving device is provided. The intelligent driving device includes the apparatus according to any possible implementation of the second aspect or the third aspect.

With reference to the fourth aspect, in some implementations of the fourth aspect, the intelligent driving device is a vehicle.

According to a fifth aspect, a computer program product is provided. The computer program product includes computer program code. When the computer program code is run on a computer, the computer is enabled to perform the method according to any possible implementation of the first aspect.

It should be noted that all or some of the computer program code may be stored in a first storage medium. The first storage medium may be encapsulated with a processor, or encapsulated separately from a processor.

According to a sixth aspect, a computer-readable medium is provided. The computer-readable medium stores instructions. When the instructions are executed by a processor, the processor is enabled to implement the method according to any possible implementation of the first aspect.

According to a seventh aspect, a chip is provided. The chip includes a circuit, and the circuit is configured to perform the method according to any possible implementation of the first aspect.

### BRIEF DESCRIPTION OF DRAWINGS

FIG. 1 is a functional block diagram of a vehicle according to an embodiment of this application;
FIG. 2 is a diagram of an architecture of a system required for implementing a control method according to an embodiment of this application;
FIG. 3 is a schematic flowchart of a control method according to an embodiment of this application;
FIG. 4 is a diagram of a traveling scenario according to an embodiment of this application;
FIG. 5 is another schematic flowchart of a control method according to an embodiment of this application;
FIG. 6 is a diagram of another traveling scenario according to an embodiment of this application;
FIG. 7 is a diagram of a planned route according to an embodiment of this application;
FIG. 8A and FIG. 8B are a diagram of an HMI according to an embodiment of this application;
FIG. 9 is another schematic flowchart of a control method according to an embodiment of this application;
FIG. 10 is a block diagram of a control apparatus according to an embodiment of this application; and
FIG. 11 is another block diagram of a control apparatus according to an embodiment of this application.

### DESCRIPTION OF EMBODIMENTS

For ease of understanding the technical solutions in embodiments of this application, concepts in this application are first described.

Trapped: a state in which a vehicle is blocked by an obstacle and cannot travel smoothly.

Escape: A vehicle is separated from a state in which the vehicle is blocked by an obstacle and cannot travel smoothly, and can continue traveling.

Parking cruise: a state in which a vehicle travels at a low speed when a target parking position is not determined.

The following describes technical solutions of embodiments in this application with reference to the accompanying drawings.

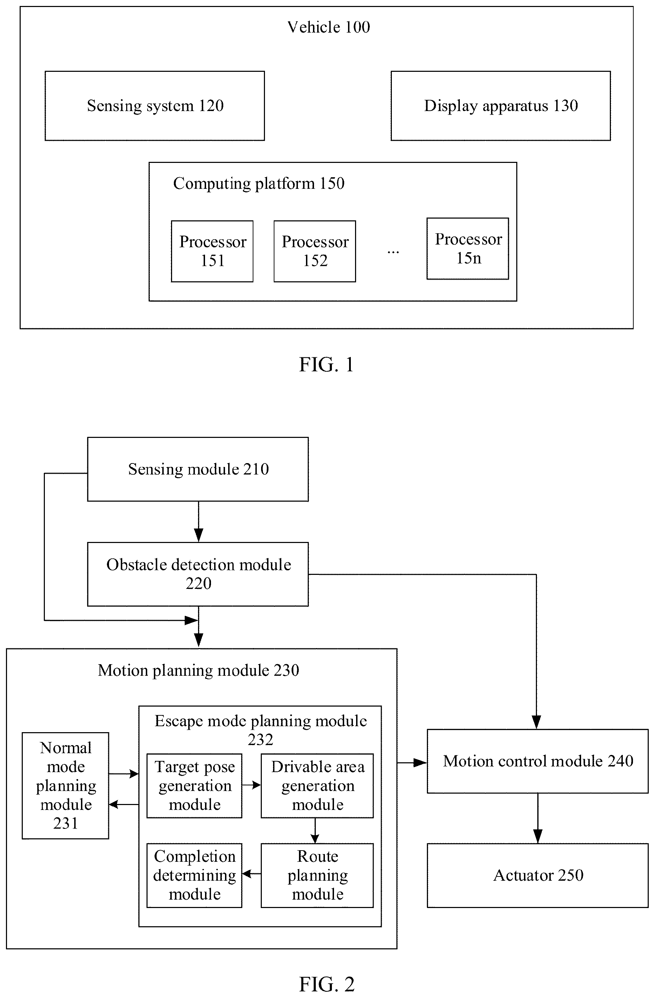

FIG. 1 is a functional block diagram of a vehicle according to an embodiment of this application. As shown in FIG. 1, the vehicle 100 may include a sensing system 120, a display apparatus 130, and a computing platform 150. The sensing system 120 may include several types of sensors configured to sense information about an ambient environment of the vehicle 100. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include processors 151 to 15n. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

The display apparatus 130 in a cockpit is mainly classified into two types. A first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cockpit, for example, a digital dashboard display and a central display. The head-up display is also referred to as a head-up display system, and is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system. The display apparatus may further include an interaction system 130, and may further include a human machine interface (human machine interface, HMI), configured to prompt a user of a switching status of a planning mode.

The vehicle 100 may include an advanced driver assistance system (advanced driver assistance system, ADAS). The ADAS obtains information around the vehicle through a plurality of types of sensors (including but not limited to the lidar, the millimeter-wave radar, the camera apparatus, an ultrasonic sensor, the global positioning system, and the inertia measurement unit) in the vehicle, and analyzes and processes the obtained information, to implement functions such as obstacle sensing, target recognition, vehicle positioning, route planning, and driver monitoring/reminder. This improves driving safety, automation, and comfort of the vehicle.

In terms of logical functions, the ADAS system usually includes three main functional modules: a sensing module, a decision-making module, and an execution module. The sensing module senses an ambient environment of a vehicle body through a sensor, and inputs corresponding real-time data to a processing center at a decision-making layer. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision signal from the decision-making module, the execution module takes a corresponding action, for example, driving, a lane change, steering, braking, or warning.

Under different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The level L0 indicates no automation, the level L1 indicates driving support, the level L2 indicates partial automation, the level L3 indicates conditional automation, the level L4 indicates high automation, and the level L5 indicates full automation. Tasks of monitoring and responding to road conditions at the levels L1 to L3 are jointly completed by a driver and a system, and the driver needs to take over a dynamic driving task. The levels L4 and L5 enable the driver to be completely transformed into a passenger. Currently, functions that can be implemented by the ADAS mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, automatic parking may include APA, RPA, and AVP. For the APA, the driver does not need to control a steering wheel, but the driver still needs to operate the vehicle to monitor a vehicle status in real time. For the RPA, the driver may remotely park the vehicle outside the vehicle by using a terminal (for example, a mobile phone). For the AVP, the vehicle may complete parking without the driver. In terms of corresponding autonomous driving levels, the APA is approximately at the level L2, the RPA is approximately at the levels L2 and L3, and the AVP is approximately at the level L4.

In this embodiment of this application, the computing platform 150 may switch a motion planning mode based on obstacle information obtained by the sensing system 120 in a traveling route of the vehicle 100, to improve passing efficiency and parking efficiency of the vehicle.

FIG. 2 is a diagram of an architecture of a control system according to an embodiment of this application. As shown in FIG. 2, the system includes a sensing module 210, an obstacle detection module 220, a motion planning module 230, a motion control module 240, and an actuator 250. The sensing module 210 may include one or more sensors in the sensing system 120 shown in FIG. 1. The obstacle detection module 220, the motion planning module 230, and the motion control module 240 may be one or more processors in the computing platform 150 shown in FIG. 1.

The sensing module 210 is configured to collect environment information around a vehicle. The environment information includes information such as a position and a type of an obstacle around the vehicle. The sensing module 210 may input the information about the obstacle into the obstacle detection module 220 and the motion planning module 230.

The obstacle detection module 220 may determine a passable width of a current traveling route of the vehicle based on the information that is about the obstacle and that is collected by the sensing module 210, so that the motion planning module 230 determines a planning mode based on the passable width of the current traveling route of the vehicle.

The motion planning module 230 includes a normal mode planning module 231 and an escape mode planning module 232. The normal mode planning module 231 may plan a traveling route according to an existing algorithm (for example, a current parking cruise algorithm) when the passable width of the traveling route is greater than a preset threshold 1. The escape mode planning module 232 may include a target pose generation module, a drivable area generation module, a route planning module, and a completion determining module. The escape mode planning module 232 may plan a traveling route for the vehicle when the passable width of the traveling route is less than or equal to the preset threshold 1. It should be noted that, the normal mode planning module 231 and the escape mode planning module 232 have different planning capabilities. For example, the normal mode planning module 231 generally can perform only forward route planning, but has a weak planning capability in an area (for example, an area with a narrow feasible road or an area with a complex obstacle position) in which a plurality of times of vehicle reversal are required to avoid an obstacle.

The motion control module 240 may calculate a corresponding control value based on the route planned by the motion planning module 230, and output the control value to the actuator 250. The actuator 250 controls, based on the control value, the vehicle to travel along the planned route. In some possible implementations, the actuator may include steering and braking control systems in the vehicle 100.

For example, when the vehicle travels based on a traveling route 1 planned by the normal mode planning module 231, and the obstacle detection module 220 determines that a passable width of a traveling route in front of the vehicle is less than or equal to the preset threshold 1, the motion control module 240 controls the vehicle to stop, and the motion planning module 230 switches to the escape mode planning module 232 to perform route planning. Specifically, the target pose generation module may generate one or more target poses based on the traveling route 1 and/or the position of the obstacle, perform collision detection based on the obstacle detected by the sensing module 210, and select, from the one or more target poses, a target pose 1 that can be used to pass through the position of the obstacle without colliding with the obstacle. The drivable area generation module generates a drivable area based on the traveling route 1 and the obstacle detected by the sensing module 210. The route planning module generates a traveling route 2 for the vehicle in the drivable area based on the target pose 1 and a vehicle parking pose, and inputs the traveling route 2 into the motion control module 240, to control the vehicle to travel along the traveling route 2. When the vehicle travels along the traveling route 2, the completion determining module monitors a traveling position of the vehicle. When determining that the vehicle travels through a position whose passable width is less than or equal to the preset threshold 1, the motion planning module 230 switches from the escape module planning module 232 to the normal mode planning module 231 to continue route planning.

It should be understood that the foregoing modules are merely examples. In actual application, the foregoing modules may be added or deleted based on an actual requirement. For example, in the architecture of the system shown in FIG. 2, the motion planning module 230 and the motion control module 240 may be combined into one module; or the obstacle detection module 220 and the motion planning module 230 may be combined into one module. For another example, the system further includes a prompt module. The prompt module receives information from the motion planning module 230, and when the motion planning module 230 performs mode switching, the prompt module sends prompt information to prompt the mode switching.

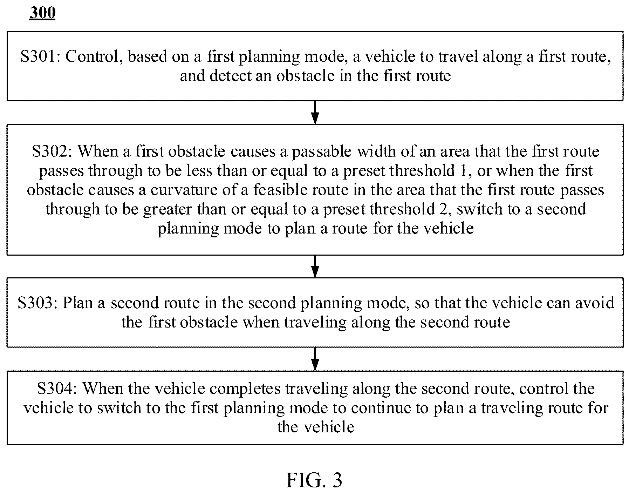

FIG. 3 is a schematic flowchart of a control method according to an embodiment of this application. The method may be applied to the vehicle shown in FIG. 1, or the method may be performed by the system shown in FIG. 2. For example, the following uses an example in which the method is performed by a computing platform of a vehicle for description. The method 300 may include the following steps.

S301: Control, based on a first planning mode, the vehicle to travel along a first route, and detect an obstacle in the first route.

For example, the first planning mode may be a mode in which the normal mode planning module 231 performs route planning, and the first route may include the traveling route 1.

In an example, when a traveling route is planned for the vehicle in the first planning mode, planning may be performed based on a map stored in the vehicle. For example, when the vehicle parks in a parking lot, if a map of the parking lot is stored in the vehicle, the vehicle may plan the first route based on the map and a parking status that is of each parking space and that is collected by the vehicle in real time.

In another example, when a traveling route is planned for the vehicle in the first planning mode, planning may be performed based on information that is about an ambient environment and that is collected by the vehicle in real time. For example, when the vehicle parks in a parking lot, a sensor of the vehicle may collect environment information within a range of 200 meters in front of the vehicle. In this case, the vehicle may plan, based on the environment information, a route from a current position of the vehicle to 200 meters ahead. The route may be considered as an example of the first route.

It should be noted that the first route is a route from the current position of the vehicle to a destination of the vehicle. The destination of the vehicle may be a final destination of the vehicle, or may be a place that the vehicle passes through to travel to the final destination.

S302: When a first obstacle causes a passable width of an area that the first route passes through to be less than or equal to a preset threshold 1, or when the first obstacle causes a curvature of a feasible route in the area that the first route passes through to be greater than or equal to a preset threshold 2, switch to a second planning mode to plan a traveling route for the vehicle.

For example, the first obstacle is an obstacle in the first route, and the second planning mode may be a mode in which the escape mode planning module 232 performs route planning.

For example, the preset threshold 1 may be 2.5 meters or 2.3 meters, or the preset threshold 1 may be another value, for example, may be determined based on an actual width of the vehicle. The preset threshold 2 may be 0.01, 0.1, or another value.

It should be noted that a route segment that the first route passes through may not be a part of the route planned for the vehicle, and the route segment presents a special form due to existence of the first obstacle. A route segment that the first route passes through may be understood as that the first route includes the route segment, or the vehicle needs to pass through the route segment to reach the destination from the current position. For example, the first route is a route planned based on the current position and the destination of the vehicle, and impact of an obstacle is not considered in the route planning process. However, due to existence of an obstacle in an area that the first route passes through, a passable width is excessively small or a curvature of a feasible route is excessively large. As a result, when the vehicle travels along the first route to the area, the vehicle cannot pass at a planned speed and route due to blocking of the obstacle.

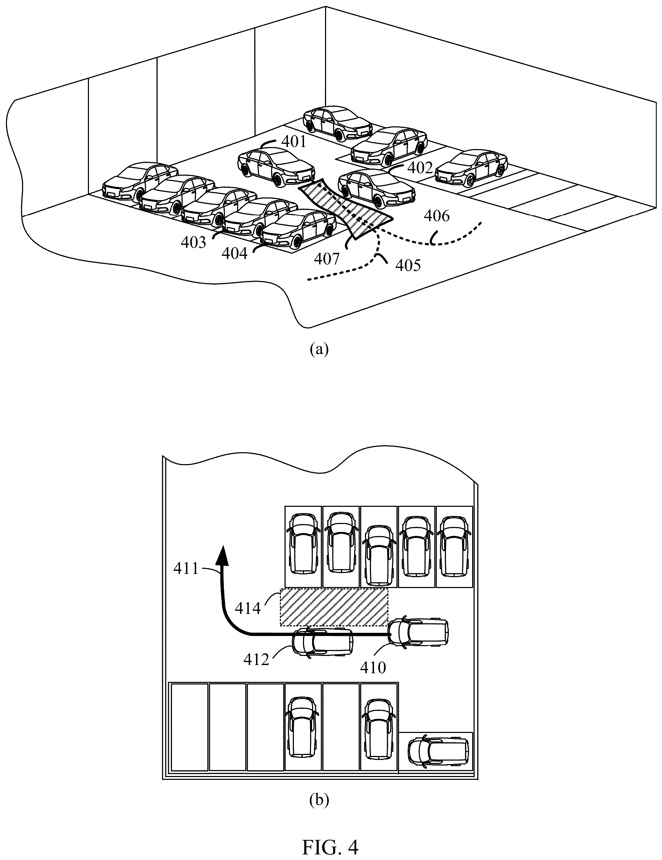

As shown in (a) in FIG. 4, a traveling route planned for a vehicle 401 is a route 405 or a route 406. Due to existence of a vehicle 402, a vehicle 403, and a vehicle 404, a passable width of an area 407 is small, and the vehicle 401 may be blocked when traveling to the area 407, and cannot travel at a planned speed. The route 405 or the route 406 may be considered as the first route, and the area 407 may be considered as the area that the first route passes through.

As shown in (b) in FIG. 4, a traveling route planned for the vehicle 410 is a route 411, and the traveling route passes through an obstacle 412. In other words, due to existence of the obstacle 412, the vehicle 410 may be blocked when traveling to the obstacle 412, and cannot travel at a planned speed. However, to travel forward, the vehicle 410 needs to pass through an area 414. In this case, the area 414 may be considered as the area that the first route passes through.

The area that the first route passes through is referred to as a first area below. The first area includes a head end and a tail end. The head end of the first area is an end close to the current position of the vehicle, and the tail end of the first area is an end close to the destination of the vehicle.

When the vehicle travels to the head end of the first area, the vehicle may stop due to blocking of the first obstacle. In this case, position coordinates of the vehicle during stopping are recorded, and the vehicle switches to the second mode to plan a traveling route for the vehicle.

S303: Plan a second route in the second planning mode, so that the vehicle can avoid the first obstacle when traveling along the second route.

In some possible implementations, when the passable width corresponding to the first area is less than or equal to the preset threshold 1 and greater than or equal to a preset threshold 3, the second route is planned based on the first route and the first obstacle. The preset threshold 3 may be the width of the vehicle, or may be another value greater than the width of the vehicle.

In some possible implementations, when the passable width corresponding to the first area is less than or equal to the preset threshold 1 and less than the preset threshold 3, a route is re-planned for the vehicle in the second planning mode based on a position of the first obstacle.

In some possible implementations, the second route includes a head end and a tail end. The head end of the second route is a start end of the route, and the tail end of the second route overlaps the tail end of the first area, or the tail end of the second route is closer to the destination of the vehicle than the tail end of the first area.

S304: When the vehicle completes traveling along the second route, control the vehicle to switch to a first planning mode to continue to plan a traveling route for the vehicle.

For example, when the vehicle travels to the tail end of the second route, it is determined that the vehicle completes traveling along the second route. In this case, the vehicle switches to the first planning mode to continue to plan a traveling route for the vehicle.

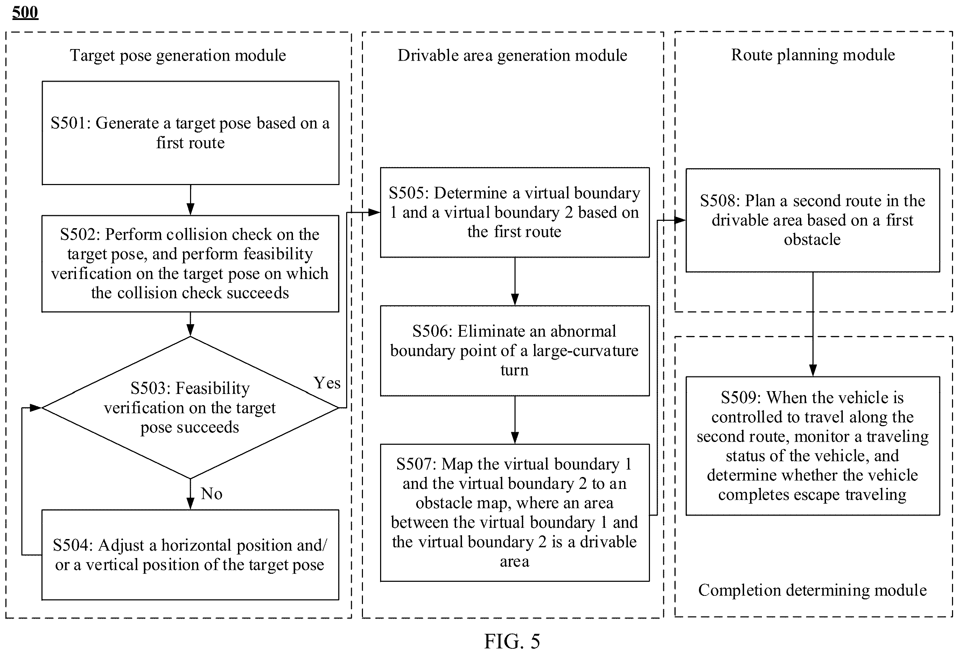

With reference to FIG. 5, the following describes a specific method for planning the second route in the second planning mode. As shown in FIG. 5, the method 500 may include the following steps.

S501: Generate a target pose based on the first route.

For example, when the target pose generation module receives indication information indicating that the vehicle stops due to blocking of the obstacle, the target pose is generated based on the first route. For example, when the vehicle stops due to blocking of the obstacle, a state machine in the motion control module changes to a stuck sign, and the indication information may include the stuck sign of the state machine.

For example, when the vehicle stops due to blocking of the first obstacle, one or more target poses are generated based on the position of the first obstacle and the first route. For example, a target pose whose longitudinal axis is parallel to a tangent line of the first route at a first position is generated, and a central point of the target pose is the first position. The first position is a position that is on the first route and that is located after the first obstacle, and being after the first obstacle may be understood as a side closer to the destination of the vehicle. For another example, a plurality of target poses whose longitudinal axes are parallel to the tangent line of the first route at the first position are generated. For another example, a plurality of poses whose longitudinal axes are parallel to tangent lines of the first route at different positions are generated, and the different positions are all located after the first obstacle and may include the first position.

In some possible implementations, the target pose may alternatively be generated based on distribution information of the first obstacle.

The longitudinal axis of the target pose is parallel to a longitudinal symmetric plane (or referred to as a Y reference plane) of the vehicle.

S502: Perform collision check on the target pose, and perform feasibility verification on the target pose on which the collision check succeeds.

For example, collision check may be performed on each of the one or more target poses, that is, it is determined whether the vehicle collides with the first obstacle when the vehicle is in the target pose.

For example, collision detection may be performed according to a GJK (Gilbert-Johnson-Keerthi) algorithm, or collision detection may be performed according to a separating axis theorem (separating axis theorem, SAT), or collision detection may be performed according to another method.

Further, feasibility verification is performed on the one or more target poses on which the collision detection succeeds.

It should be noted that, in this embodiment of this application, the feasibility verification is to verify whether the target pose can be used for passing, or verify whether the target pose can be used to reach the tail end of the first area. When the feasibility verification succeeds, it indicates that the first obstacle does not affect traveling of the vehicle from the head end of the first area to the tail end of the first area.

S503: Determine whether the feasibility verification on the target pose succeeds.

Specifically, when the feasibility verification on the target pose succeeds, S505 is performed. Otherwise, S504 is performed.

For example, feasibility verification may be performed on the target pose according to a fast A* detection algorithm, that is, it is verified whether the vehicle can travel out of the tail end of the first area in the target pose.

For example, when feasibility verification on a target pose 1 succeeds, the target pose 1 may be used as a target escape pose to plan the second route. The target pose 1 is one of the one or more target poses.

It should be noted that the target escape pose indicates a pose at which the vehicle travels away from the tail end of the first area.

S504: Adjust a horizontal position and/or a vertical position of the target pose.

For example, for a target pose on which the collision check fails or the feasibility verification fails, an adjustment of horizontal translation first and then vertical translation is performed, to avoid the first obstacle.

S505: Determine a virtual boundary 1 and a virtual boundary 2 based on the first route.

For example, the virtual boundary 1 and the virtual boundary 2 are respectively generated on two sides of the first route at a preset distance.

For example, the preset distance may be 2 meters, 2.5 meters, or another value.

S506: Eliminate an abnormal boundary point of a large-curvature turn.

In some possible implementations, if the first area includes a large-curvature turn, an abnormal boundary point may exist when a virtual boundary is generated. In this case, the abnormal boundary point needs to be eliminated to generate a continuous virtual boundary.

S507: Map the virtual boundary 1 and the virtual boundary 2 to an obstacle map, where an area between the virtual boundary 1 and the virtual boundary 2 is a drivable area.

For example, the virtual boundary 1 and the virtual boundary 2 are mapped as virtual obstacles on the obstacle map, so that the drivable area of the vehicle can be limited to the area during planning.

It should be noted that, after the virtual boundary 1 and the virtual boundary 2 are mapped to the obstacle map, the virtual boundaries and the first obstacle form a new obstacle. When the vehicle performs route planning, route planning needs to be performed based on a position of the new obstacle.

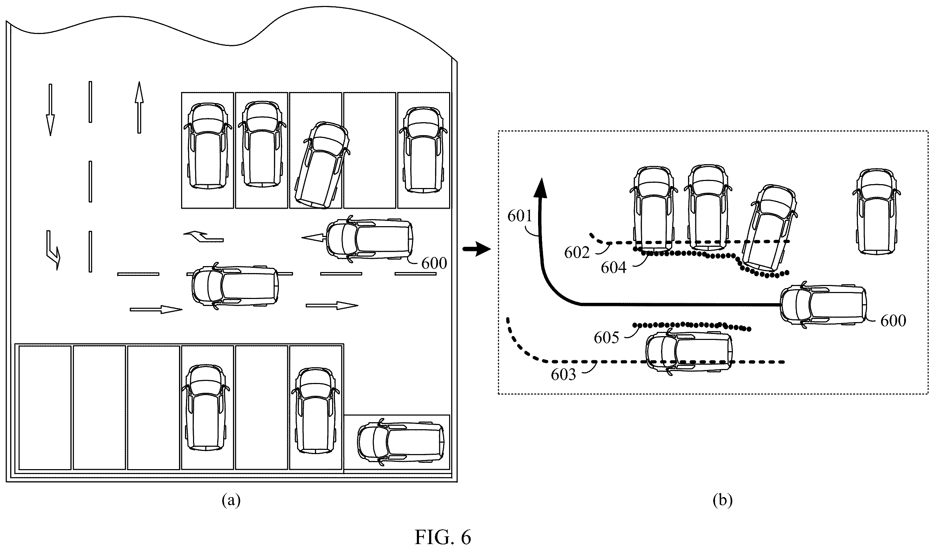

When a vehicle 600 travels in a parking lot shown in (a) in FIG. 6, a traveling route 601 is planned for the vehicle 600 in the first planning mode. However, because obstacles exist on two sides of the traveling route 601, the vehicle 600 is blocked by the obstacles when traveling to a position shown in (b) in FIG. 6 and stops. In this case, the vehicle 600 switches to the second planning mode to continue planning, and generates a virtual boundary 602 and a virtual boundary 603 based on the traveling route 601. For example, when the virtual boundary 602 and the virtual boundary 603 are mapped to the obstacle map, the obstacle map may include both the virtual boundaries and obstacle boundaries (for example, an obstacle boundary 604 and an obstacle boundary 605).

S508: Plan the second route in the drivable area based on the first obstacle.

For example, the second route of the vehicle is planned in the drivable area based on a current pose of the vehicle and the target pose 1 determined in S503.

In an example, the second route may be generated according to a hybrid A* algorithm. For example, an open list and a closed list are first initialized, and a to-be-expanded node calculated by using a vehicle kinematic constraint is generated offline as a state quantity increment of a current node. The current pose of the vehicle is added to the open list, the to-be-expanded node is expanded by using the kinematic constraint and an obstacle avoidance constraint (for example, the virtual boundary 1, the virtual boundary 2, and the first obstacle), a parent node is set to the current node, and a start point is deleted from the open list and added to the closed list. Then, the following steps are repeated: First, evaluation function values of all nodes in the open list are calculated, a node with a smallest value is selected as a new expanded node, and the node is removed from the open list and added to the closed list. A node that can be expanded by using the vehicle kinematic constraint based on the node is checked, and the node does not collide with the obstacle and is not in the closed list. If the to-be-expanded node is not in the open list, the to-be-expanded node is added to the open list, and the current node is set to the parent node. If the to-be-expanded node is in the open list, an evaluation function value of the to-be-expanded node in this expansion manner is calculated and compared with an original evaluation function value to obtain a smaller value, so as to update the parent node. A completion condition for the repeated steps is that if the to-be-expanded node falls within a specific range of the target pose 1, it may be considered that search succeeds. If the completion condition is not satisfied until the open list is empty, the search fails and the steps exit.

In another example, the second route may be generated according to a geometric method. For example, a connection from the current pose of the vehicle to the target pose 1 is implemented by splicing a plurality of straight lines and arcs. Variables of the target pose 1 include a horizontal coordinate, a vertical coordinate, and a heading angle. A geometric relationship that is between the variables and that is obtained by splicing the straight lines and the arcs is described, and a system of linear equations is established for solving to obtain lengths of the straight line and the arc and a splicing manner. A straight line-arc splicing mode includes straight line-arc, arc-straight line, straight line-arc-straight line, and the like. If a route from the current pose to the target pose 1 cannot be planned at a time, an intermediate pose still needs to be searched for, the entire problem is divided and processed, and a complete route is obtained by resolving sub-problems. For example, the first area is segmented to obtain a plurality of area segments, a route segment is generated in each of the plurality of area segments according to the geometric method, and routes in the plurality of area segments are spliced to obtain the second route.

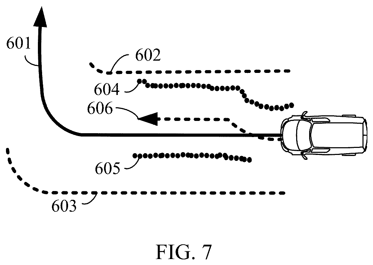

For example, as shown in FIG. 7, in the drivable area including the virtual boundary 602 and the virtual boundary 603, the second route planned based on the first obstacle may be shown as a route 606.

S509: When the vehicle is controlled to travel along the second route, monitor a traveling status of the vehicle, and determine whether the vehicle completes escape traveling.

In a possible implementation, a destination circle criterion or a destination line criterion is designed, and when a pose of the vehicle satisfies the destination circle criterion or the destination line criterion, it is determined that the vehicle completes escape traveling.

For example, the destination circle criterion may be that, when the vehicle travels in a specific range of the target pose 1, it may be determined that the vehicle completes escape. The specific range may be a range of 2 meters away from the center of the target pose 1, or may be another range. The destination line criterion may be that, when the vehicle passes through the target pose 1, it is determined that the vehicle completes escape.

In some possible implementations, when it is determined that the vehicle completes the escape traveling, the vehicle switches back to the first planning mode to continue to plan a traveling route for the vehicle.

It should be noted that, in a specific implementation process, not all operations in FIG. 5 need to be performed. For example, S504 and/or S506 may not be performed. In addition, the operations shown in FIG. 5 may not be performed in the sequence shown in the figure. For example, S505 to S507 and S501 to S504 may be performed simultaneously.

According to the control method provided in this embodiment of this application, two route planning modes are provided. In a traveling process of the vehicle, mode switching is performed based on an actual road condition. This not only helps reduce computing power required for route planning, but also helps improve an escape capability of the vehicle. Particularly, in an AVP parking process, a probability that the vehicle cannot perform route planning in a scenario with a narrow passage or a complex obstacle position relationship can be reduced, helping improve an AVP parking success rate.

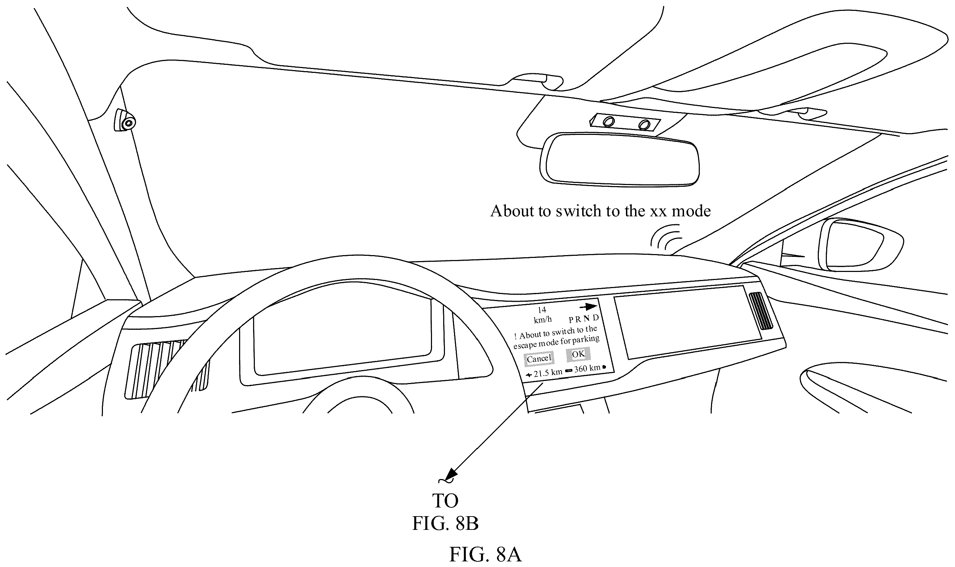

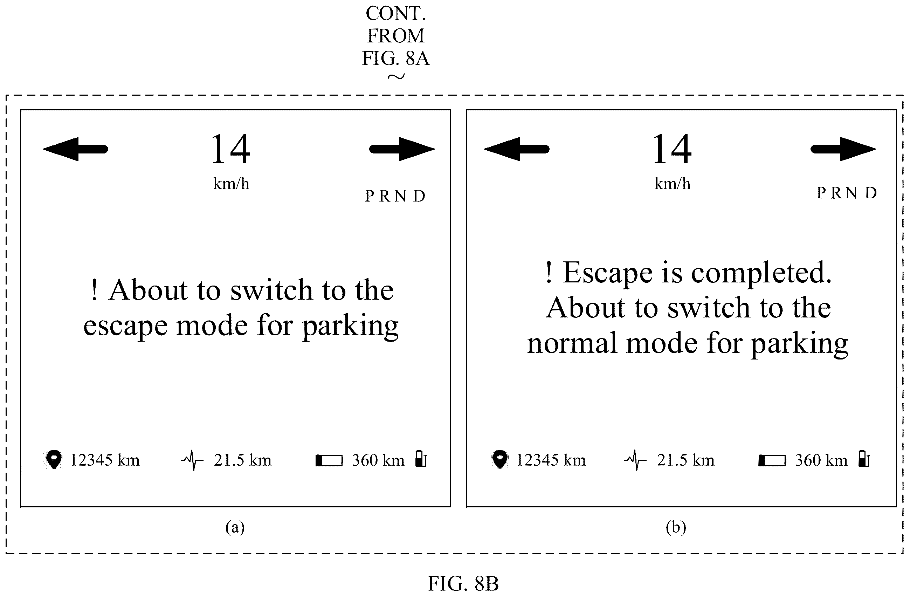

In some possible implementations, during mode switching, the vehicle may further prompt a user with a mode switching status through an HMI or a sounding apparatus like a speaker or a sound box. For example, as shown in (a) in FIG. 8B, in a parking process, when the vehicle is about to switch from the first planning mode (for example, the normal mode) to the second planning mode (for example, the escape mode), a central control screen may display "! About to switch to the escape mode for parking" for prompting. As shown in (b) in FIG. 8B, when the vehicle completes escape and is about to switch from the second planning mode back to the first planning mode, the central control screen may display "! Escape is completed. About to switch to the normal mode for parking" for prompting. It should be understood that FIG. 8A and FIG. 8B are merely an example for description. In a specific implementation process, a prompt may alternatively be provided after the mode switching.

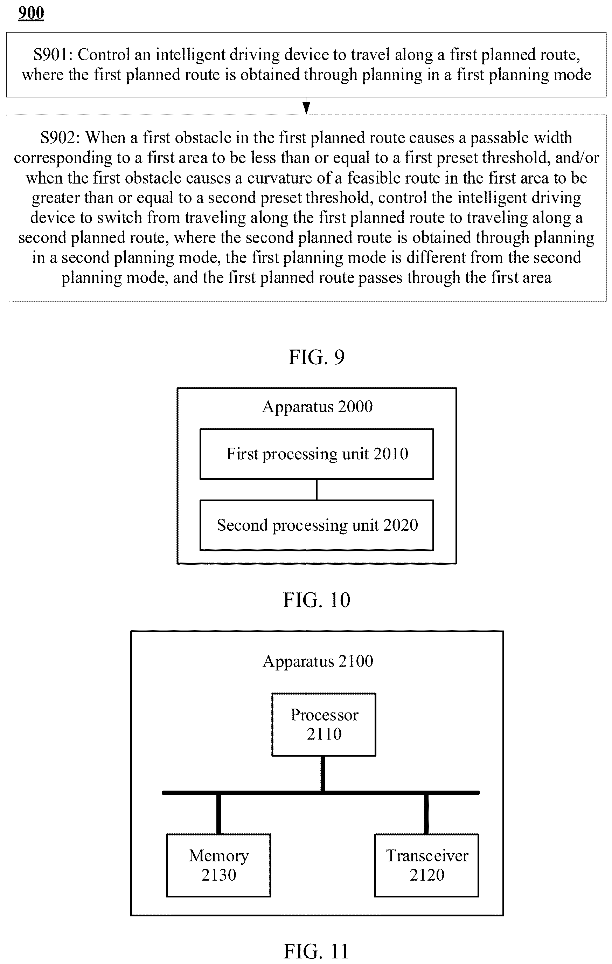

FIG. 9 is a schematic flowchart of a control method according to an embodiment of this application. The method may be applied to an intelligent driving device, and the method 900 may include the following steps.

S901: Control the intelligent driving device to travel along a first planned route, where the first planned route is a route planned in a first planning mode.

For example, the intelligent driving device includes the vehicle in the foregoing embodiments, the first planned route includes the first route in the foregoing embodiments, and the first planning mode includes the first planning mode in the foregoing embodiments.

S902: When a first obstacle in the first planned route causes a passable width corresponding to a first area to be less than or equal to a first preset threshold, and/or when the first obstacle causes a curvature of a feasible route in the first area to be greater than or equal to a second preset threshold, control the intelligent driving device to switch from traveling along the first planned route to traveling along a second planned route, where the second planned route is obtained through planning in a second planning mode, the first planning mode is different from the second planning mode, and the first planned route passes through the first area.

For example, the second planning mode includes the second planning mode in the foregoing embodiments, and the second planned route includes the second route in the foregoing embodiments.

For example, the first area includes the first area in the foregoing embodiments, the first area includes a head end and a tail end, the head end of the first area is an end close to a current position of the intelligent driving device, and the tail end of the first area is an end close to a destination of the intelligent driving device.

In some possible implementations, the method further includes: determining a first target pose of the intelligent driving device based on the first planned route; determining a second target pose based on the first target pose and a position of the first obstacle, where the second target pose indicates a pose at which the intelligent driving device travels out of the first area; and planning the second route based on a current pose of the intelligent driving device, the second target pose, and the first obstacle.

For example, the first target pose may include the target pose generated in S501, and the second target pose may include the target pose 1. For a specific method for determining the second target pose based on the first target pose and the position of the first obstacle, refer to the descriptions in S502 and S503. Details are not described herein again.

In some possible implementations, the method further includes: determining a drivable area along the first planned route based on the first planned route; and planning the second planned route based on the current pose of the intelligent driving device and the second target pose includes: planning the second planned route in the drivable area based on the current pose, the second target pose, and the first obstacle.

For example, for a specific method for planning the second planned route in the drivable area, refer to the descriptions in S508. Details are not described herein again.

In some possible implementations, when the intelligent driving device avoids the first obstacle based on the second planned route, the intelligent driving device is controlled to switch from traveling along the second planned route to traveling along a third planned route, where the third planned route is obtained through planning in the first planning mode.

For example, when the intelligent driving device travels in a preset range of the second target pose, or when the intelligent driving device travels through the second target pose, it is determined that the intelligent driving device avoids the first obstacle based on the second planned route.

In some possible implementations, the method further includes: when the intelligent driving device avoids the first obstacle based on the second planned route, controlling a prompt apparatus to give a prompt to stop the second planning mode and/or start the first planning mode.

In some possible implementations, the method further includes: when the first obstacle in the first planned route causes the passable width corresponding to the first area to be less than or equal to the first preset threshold, and/or when the first obstacle causes the curvature of the feasible route in the first area to be greater than or equal to the second preset threshold, controlling the prompt apparatus to give a prompt to stop the first planning mode and/or start the second planning mode.

For a specific prompt method of the prompt apparatus, refer to the descriptions of the corresponding part in FIG. 8A and FIG. 8B. Details are not described herein again.

The control method provided in this embodiment of this application helps improve an escape capability of an automatic parking function, reduce a probability that the vehicle cannot perform route planning due to a narrow road or a complex road condition, and improve a parking success rate. According to the foregoing method, when the vehicle is stuck in a large-curvature narrow-passage scenario, an escape function may be automatically triggered, and a specific scenario does not need to be identified. Therefore, this method has wide applicability in complex scenarios.

The foregoing describes in detail the methods provided in embodiments of this application with reference to FIG. 1 to FIG. 9. The following describes in detail an apparatus provided in embodiments of this application with reference to FIG. 10 and FIG. 11. It should be understood that descriptions of apparatus embodiments correspond to the descriptions of the method embodiments. Therefore, for content that is not described in detail, refer to the foregoing method embodiments. For brevity, details are not described herein again.

FIG. 10 is a block diagram of a control apparatus 2000 according to an embodiment of this application. The apparatus 2000 includes a first processing unit 2010 and a second processing unit 2020. The first processing unit 2010 is configured to control an intelligent driving device to travel along a first planned route, where the first planned route is obtained through planning in a first planning mode. The second processing unit 2020 is configured to: when a first obstacle in the first planned route causes a passable width corresponding to a first area to be less than or equal to a first preset threshold, and/or when the first obstacle causes a curvature of a feasible route in the first area to be greater than or equal to a second preset threshold, control the intelligent driving device to switch from traveling along the first planned route to traveling along a second planned route, where the second planned route is obtained through planning in a second planning mode, the first planning mode is different from the second planning mode, and the first planned route passes through the first area.

Optionally, the first area includes a head end and a tail end, the head end of the first area is an end close to a current position of the intelligent driving device, and the tail end of the first area is an end close to a destination of the intelligent driving device. The second processing unit 2020 is configured to: determine a first target pose of the intelligent driving device based on the first planned route; determine a second target pose based on the first target pose and a position of the first obstacle, where the second target pose indicates a pose at which the intelligent driving device travels out of the first area; and plan the second planned route based on a current pose of the intelligent driving device, the second target pose, and the first obstacle.

Optionally, the second processing unit 2020 is further configured to: determine a drivable area along the first planned route based on the first planned route; and plan the second planned route in the drivable area based on the current pose, the second target pose, and the first obstacle.

Optionally, the second processing unit 2020 is further configured to: when the intelligent driving device travels in a preset range of the second target pose, or when the intelligent driving device travels through the second target pose, determine that the intelligent driving device avoids the first obstacle based on the second planned route.

Optionally, the second processing unit 2020 is further configured to: when the intelligent driving device avoids the first obstacle based on the second planned route, control the intelligent driving device to switch from traveling along the second planned route to traveling along a third planned route, where the third planned route is obtained through planning in the first planning mode.

Optionally, the second processing unit 2020 is further configured to: when the intelligent driving device avoids the first obstacle based on the second planned route, control a prompt apparatus to give a prompt to stop the second planning mode and/or start the first planning mode.

Optionally, the second processing unit 2020 is further configured to: when the first obstacle in the first planned route causes the passable width corresponding to the first area to be less than or equal to the first preset threshold, control the prompt apparatus to give a prompt to stop the first planning mode and/or start the second planning mode.

Optionally, the second planning mode includes a hybrid A* algorithm.

For example, the first processing unit 2010 and the second processing unit 2020 may be disposed in the system shown in FIG. 2. More specifically, the first processing unit 2010 may be disposed in the obstacle detection module 220, and the second processing unit 2020 may be disposed in the motion planning module 230. For example, the operations performed by the first processing unit 2010 and the second processing unit 2020 may be performed by one processor, or may be performed by different processors. In a specific implementation process, the one or more processors may be processors disposed on the vehicle 100 shown in FIG. 1, or the apparatus 2000 may be a chip disposed in the vehicle 100.

In a specific implementation process, all or some of the units in the foregoing apparatus may be integrated, or may be implemented independently. In an implementation, these units are integrated together and implemented in a form of a system-on-a-chip (system-on-a-chip, SoC).

FIG. 11 is a block diagram of a control apparatus according to an embodiment of this application. A control apparatus 2100 shown in FIG. 11 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but not limited to a transceiver apparatus like an input/output interface (input/output interface), to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses, for example, but is not limited to, a transceiver apparatus of a transceiver type, to implement communication between the apparatus 2100 and another device or a communication network, to receive/send data/information used to implement the methods in the foregoing embodiments.

In a specific implementation process, the apparatus 2100 may be disposed in an intelligent device 100 shown in FIG. 2.

An embodiment of this application further provides an intelligent driving device. The intelligent driving device includes the foregoing apparatus 2000 or the foregoing apparatus 2100.

The intelligent driving device in this application may include a vehicle on a road, a vehicle on water, an air vehicle, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the vehicle may be a transport means like an airplane or a ship.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods can be implemented by using a hardware integrated logical circuit in the processor, or by using instructions in a form of software. The methods disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in a memory, and the processor reads information in the memory and completes the steps of the methods in combination with hardware of the processor. To avoid repetition, details are not described herein again.

It may be clearly understood by a person skilled in the art that, for convenient and brief description, for a detailed working process of the foregoing system, apparatus, and unit, refer to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish between different described objects, and do not limit positions, a sequence, priorities, quantities, content, or the like of the described objects. Use of the prefix words, such as ordinal numbers, used to distinguish between described objects in embodiments of this application does not constitute a limitation on the described objects. For descriptions of the described objects, refer to the context descriptions in the claims or embodiments. Use of such a prefix word should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

In embodiments of this application, unless otherwise stated or there is a logical conflict, terms and/or descriptions in embodiments are consistent and may be mutually referenced, and technical features in different embodiments may be combined according to an internal logical relationship thereof, to form a new embodiment.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
controlling an intelligent driving device to travel along a first planned route, wherein the first planned route is obtained through planning in a first planning mode; and
when a first obstacle in the first planned route causes a passable width corresponding to a first area to be less than or equal to a first preset threshold, and/or when the first obstacle causes a curvature of a feasible route in the first area to be greater than or equal to a second preset threshold, controlling the intelligent driving device to switch from traveling along the first planned route to traveling along a second planned route, wherein the second planned route is obtained through planning in a second planning mode, the first planning mode is different from the second planning mode, and the first planned route passes through the first area.

2. The method according to claim 1, wherein the first area comprises a head end and a tail end, the head end of the first area is an end close to a current position of the intelligent driving device, and the tail end of the first area is an end close to a destination of the intelligent driving device; and
the method further comprises:
determining a first target pose of the intelligent driving device based on the first planned route;
determining a second target pose based on the first target pose and a position of the first obstacle, wherein the second target pose indicates a pose at which the intelligent driving device travels out of the tail end of the first area; and
planning the second planned route based on a current pose of the intelligent driving device, the second target pose, and the first obstacle.

3. The method according to claim 2, wherein the method further comprises:
determining a drivable area along the first planned route based on the first planned route; and
planning the second planned route based on the current pose of the intelligent driving device and the second target pose comprises:
planning the second planned route in the drivable area based on the current pose, the second target pose, and the first obstacle.

4. The method according to claim 2, wherein the method further comprises:
when the intelligent driving device travels in a preset range of the second target pose, or when the intelligent driving device travels through the second target pose, determining that the intelligent driving device avoids the first obstacle based on the second planned route.

5. The method according to any one of claims 1 to 4, wherein the method further comprises:
when the intelligent driving device avoids the first obstacle based on the second planned route, controlling the intelligent driving device to switch from traveling along the second planned route to traveling along a third planned route, wherein the third planned route is obtained through planning in the first planning mode.

6. The method according to claim 5, wherein the method further comprises:
when the intelligent driving device avoids the first obstacle based on the second planned route, controlling a prompt apparatus to give a prompt to stop the second planning mode and/or start the first planning mode.

7. The method according to any one of claims 1 to 6, wherein the method further comprises:
when the first obstacle in the first planned route causes the passable width corresponding to the first area to be less than or equal to the first preset threshold, and/or when the first obstacle causes the curvature of the feasible route in the first area to be greater than or equal to the second preset threshold, controlling the prompt apparatus to give a prompt to stop the first planning mode and/or start the second planning mode.

8. The method according to any one of claims 1 to 7, wherein the second planning mode comprises a hybrid A* algorithm.

9. A control apparatus, comprising a first processing unit and a second processing unit, wherein
the first processing unit is configured to control an intelligent driving device to travel along a first planned route, wherein the first planned route is obtained through planning in a first planning mode; and
the second processing unit is configured to: when a first obstacle in the first planned route causes a passable width corresponding to a first area to be less than or equal to a first preset threshold, and/or when the first obstacle causes a curvature of a feasible route in the first area to be greater than or equal to a second preset threshold, control the intelligent driving device to switch from traveling along the first planned route to traveling along a second planned route, wherein the second planned route is obtained through planning in a second planning mode, the first planning mode is different from the second planning mode, and the first planned route passes through the first area.

10. The apparatus according to claim 9, wherein the first area comprises a head end and a tail end, the head end of the first area is an end close to a current position of the intelligent driving device, and the tail end of the first area is an end close to a destination of the intelligent driving device; and
the second processing unit is configured to:
determine a first target pose of the intelligent driving device based on the first planned route;
determine a second target pose based on the first target pose and a position of the first obstacle, wherein the second target pose indicates a pose at which the intelligent driving device travels out of the tail end of the first area; and
plan the second planned route based on a current pose of the intelligent driving device, the second target pose, and the first obstacle.

11. The apparatus according to claim 10, wherein the second processing unit is further configured to:
determine a drivable area along the first planned route based on the first planned route; and
plan the second planned route in the drivable area based on the current pose, the second target pose, and the first obstacle.

12. The apparatus according to claim 10, wherein the second processing unit is further configured to:
when the intelligent driving device travels in a preset range of the second target pose, or when the intelligent driving device travels through the second target pose, determine that the intelligent driving device avoids the first obstacle based on the second planned route.

13. The apparatus according to any one of claims 9 to 12, wherein the second processing unit is further configured to:
when the intelligent driving device avoids the first obstacle based on the second planned route, control the intelligent driving device to switch from traveling along the second planned route to traveling along a third planned route, wherein the third planned route is obtained through planning in the first planning mode.

14. The apparatus according to claim 13, wherein the second processing unit is further configured to:
when the intelligent driving device avoids the first obstacle based on the second planned route, control a prompt apparatus to give a prompt to stop the second planning mode and/or start the first planning mode.

15. The apparatus according to any one of claims 9 to 14, wherein the second processing unit is further configured to:
when the first obstacle in the first planned route causes the passable width corresponding to the first area to be less than or equal to the first preset threshold, and/or when the first obstacle causes the curvature of the feasible route in the first area to be greater than or equal to the second preset threshold, control the prompt apparatus to give a prompt to stop the first planning mode and/or start the second planning mode.

16. The apparatus according to any one of claims 9 to 15, wherein the second planning mode comprises a hybrid A* algorithm.

17. A control apparatus, comprising:
a memory, configured to store a computer program; and
a processor, configured to execute the computer program stored in the memory, so that the apparatus performs the method according to any one of claims 1 to 8.

18. An intelligent driving device, wherein the intelligent driving device comprises the apparatus according to any one of claims 9 to 17.

19. A computer-readable storage medium, wherein the computer-readable storage medium stores instructions, and when the instructions are executed by a processor, the processor is enabled to implement the method according to any one of claims 1 to 8.

20. A chip, wherein the chip comprises a circuit, and the circuit is configured to perform the method according to any one of claims 1 to 8.
